# EUROPÄISCHE PATENTANMELDUNG

(11) **EP 1 286 034 A1**
(43) Veröffentlichungstag der Anmeldung: **26.02.2003**
(21) Anmeldenummer: 02016004.0
(22) Anmeldetag: 18.07.2002
(51) Int. Cl.: F02D 41/20, F02D 41/40

(54) **Verfahren und Vorrichtung zum Ansteuern eines Magnetventils**

(30) Priorität: 16.08.2001 DE 10140093
(71) Anmelder: ROBERT BOSCH GMBH, 70442 Stuttgart (DE)
(72) Erfinder: Bronkal, Bernhard, 73257 Koengen (DE); Wuest, Marcel, 70825 Korntal (DE); Valouch, Bernhard, 75031 Eppingen (DE); Schueler, Harald, 71522 Backnang (DE); Landhaeusser, Felix, 73274 Notzingen (DE); Milewski, Hans-Heinrich, 71254 Ditzingen (DE); Hammer, Juergen, Dr., 70734 Fellbach (DE)

(57) **Zusammenfassung**

Die vorliegende Erfindung betrifft ein Verfahren zum Ansteuern von zumindest einem eine Ruhestellung und eine Arbeitsstellung aufweisenden Magnetventil (200, 201, 202, 203), insbesondere einem Injektor-Magnetventil (200, 201, 202, 203) einer Kraftstoff-Einspritz-anlage, bei dem die Magnetventil-Arbeitsstellungsdauer über die Ansteuerdauer des Magnetventils (200, 201, 202, 203) beeinflusst wird.

Erfindungsgemäß ist bei dem Verfahren vorgesehen, dass zumindest bei kurzen Magnetventil-Arbeitsstellungsdauern zusätzlich zur Ansteuerdauer (T) weitere Eigenschaften eines Ansteuerstromprofils (i(t)) verändert werden.

## Beschreibung

Die vorliegende Erfindung betrifft ein Verfahren zum Ansteuern von zumindest einem eine Ruhestellung und eine Arbeitsstellung aufweisenden Magnetventil, insbesondere einem Injektor-Magnetventil einer Kraftstoff-Einspritzanlage, bei dem die Magnetventil-Arbeitsstellungsdauer über die Ansteuerdauer des Magnetventils beeinflusst wird. Weiterhin betrifft die vorliegende Erfindung eine Vorrichtung mit zumindest einem eine Ruhestellung und eine Arbeitsstellung aufweisenden Magnetventil, insbesondere einem Injektor-Magnetventil einer Kraftstoff-Einspritzanlage, und mit einer Magnetventilansteuereinrichtung, die über die Ansteuerdauer die Magnetventil-Arbeitsstellungsdauer beeinflusst.

### Stand der Technik

Die Ansteuerung von Magnetventilen ist beispielsweise im Zusammenhang mit Kraftstoff-Einspritzanlagen erforderlich. In diesem Zusammenhang werden in der Regel Magnetventile verwendet, die in ihrer Ruhestellung geschlossen sind. Die Erfindung ist jedoch nicht auf in der Ruhestellung geschlossene Magnetventile beschränkt, sonder kann auch im Zusammenhang mit Magnetventilen verwendet werden, die in der Arbeitsstellung geschlossen sind. Unter der Ruhestellung ist allgemein der unbestromte Zustand des Magnetventils zu verstehen, während die Arbeitsstellung die Stellung ist, die das Magnetventil im bestromten Zustand einnimmt.

Bei einer bekannten Kraftstoff-Einspritzanlage, die auch als Speichereinspritzsystem bezeichnet wird, sind die Druckerzeugung und die Einspritzung voneinander entkoppelt. Der Einspritzdruck wird unabhängig von der Motordrehzahl und der Einspritzmenge erzeugt und steht in einem Kraftstoffspeicher, der auch als "Rail" bezeichnet wird, für die Einspritzung bereit. Der Einspritzzeitpunkt und die Einspritzmenge werden in einem elektronischen Steuergerät berechnet und von einem Injektor beziehungsweise einer Einspritzeinheit an jedem Motorzylinder über ein angesteuertes Magnetventil umgesetzt, bei dem es sich in diesem Fall um ein in der Ruhestellung geschlossenes Magnetventil handelt.

In diesem Zusammenhang ist es bekannt, vor der so genannten Haupteinspritzung, mit der die Energie für die abgegebene Arbeit des Motors eingebracht wird, eine so genannte Voreinspritzung durchzuführen, bei der eine kleine Menge von Kraftstoff, insbesondere von Dieselkraftstoff, in den Zylinder eingebracht wird. Die bei der Voreinspritzung in den Zylinder eingebrachte Kraftstoffmenge kann beispielsweise zwischen 1 mm³ und 4 mm³ liegen. Diese Voreinspritzung bewirkt eine Vorkonditionierung des Brennraums, verbessert den Wirkungsgrad der Verbrennung und kann darüber hinaus folgende Effekte erzielen: der Kompressionsdruck wird durch eine Vorreaktion beziehungsweise teilweise Verbrennung leicht angehoben, wodurch der Zündverzug der Haupteinspritzung verkürzt wird und der Verbrennungsdruckanstieg und die Verbrennungsdruckspitzen verringert werden, was zu einer so genannten weichen Verbrennung führt. Diese Effekte verringern das Verbrennungsgeräusch, den Kraftstoffverbrauch und in vielen Fällen die Emissionen.

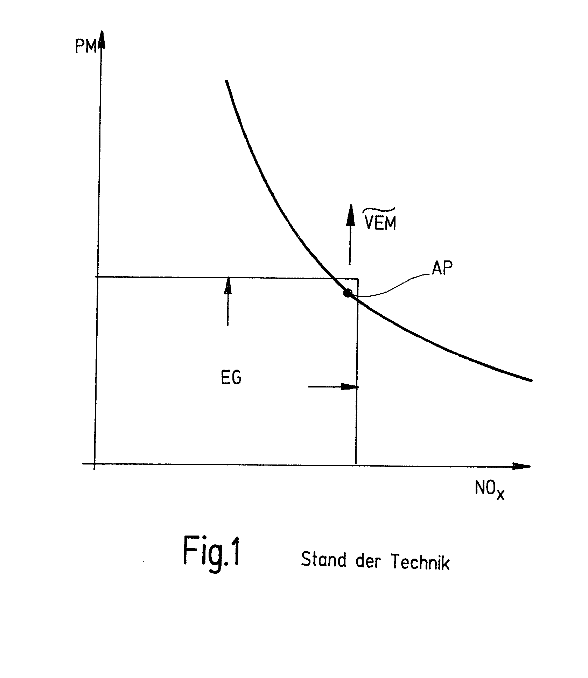

Figur 1 zeigt den bekannten Zusammenhang zwischen der Partikelemission und der Emission von Stickoxiden für einen Dieselmotor. Dieser Kurve ist zu entnehmen, dass eine Verringerung der Partikelemission zu einem Anstieg der Emission von Stickoxiden führt und umgekehrt. Die Wahl eines Arbeitspunktes AP stellt daher immer einen Kompromiss dar, weshalb der in Figur 1 dargestellte Zusammenhang auch als "Trade-Off" bezeichnet wird. Um beispielsweise vom Gesetzgeber vorgegebene Emissionsgrenzwerte EG sowohl für die Partikelemission als auch für die Emission von Stickoxiden einzuhalten, ist es daher erforderlich, den Arbeitspunkt AP in geeigneter Weise auf der in Figur 1 dargestellten Kurve zu verschieben. Diese Verschiebung des Arbeitspunktes AP kann insbesondere durch die Veränderung von Spritzbeginn und Abgasrückführung erfolgen. Eine Anhebung der Voreinspritzmenge VEM führt jedoch zu einem Anstieg der Partikelemission, wie dies in Figur 1 durch den nach oben gerichteten Pfeil angedeutet ist, der auf eine Verschiebung des Arbeitspunktes AP nach oben, jedoch auf der Kurve, hinweist. In erster Näherung ändert sich dabei die Stickoxidemission nur wenig.

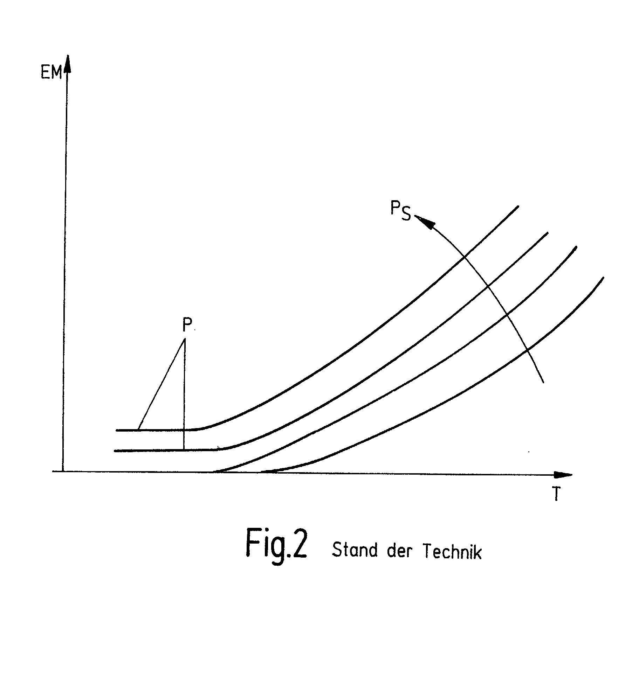

Wie erwähnt, sind die bei der Voreinspritzung eingespritzten Kraftstoffmengen sehr klein, so dass sehr kurze Magnetventil-Arbeitsstellungsdauern erforderlich sind. Bei bekannten Verfahren zum Ansteuern von Injektor-Magnetventilen ist vorgesehen, dass die Magnetventil-Arbeitsstellungsdauer zur Laufzeit nur über eine Variation der Ansteuerdauer beeinflusst wird. Dabei tritt jedoch ein weiteres Problem auf, das anhand von Figur 2 näher erläutert wird.

Figur 2 zeigt ein an sich bekanntes Kennlinienfeld, das die Einspritzmenge EM in Abhängigkeit von der Einspritzdauer T für unterschiedliche Drücke pₛ im Kraftstoffspeicher veranschaulicht. Den Kurvenverläufen von Figur 2 ist zu entnehmen, dass die Kurven im Bereich von kurzen Ansteuerdauern ein Plateau P aufweisen. Im Bereich eines Plateaus P verläuft die Kurve ungefähr parallel zur Ansteuerdauer-Achse, das heißt im Bereich eines Plateaus P ist eine Veränderung der Einspritzmenge durch eine Veränderung der Ansteuerdauer nicht möglich. Auch im Kennfeldbereich der Plateaus P werden jedoch Voreinspritzungen durchgeführt. Die Ausbildung des Plateaus beginnt beispielsweise etwa bei 700 bar Raildruck.

### Vorteile der Erfindung

Dadurch, dass bei dem erfindungsgemäßen Verfahren vorgesehen ist, dass zumindest bei kurzen Magnetventil-Arbeitsstellungsdauern zusätzlich zur Ansteuerdauer weitere Eigenschaften eines Ansteuerstromprofils verändert werden, kann die Magnetventil-Arbeitsstellungsdauer auch im Bereich von sehr kurzen Magnetventil-Arbeitsstellungsdauern genau eingestellt werden. Dadurch ist es beispielsweise möglich, die bei einer Voreinspritzung eingespritzte Kraftstoffmenge zu variieren und dadurch beispielsweise bestimmte Emissionswerte einzustellen.

Bei dem erfindungsgemäßen Verfahren ist vorzugsweise vorgesehen, dass die weiteren Eigenschaften des Ansteuerstromprofils die Kinetik des Magnetventils beeinflussen. Hierunter ist beispielsweise zu verstehen, dass der Impuls variiert wird, der auf ein bewegliches Element des Magnetventils ausgeübt wird, wenn das bewegliche Element des Magnetventils beim Wechsel in die Arbeitsstellung an einem Anschlag anstößt. Dieses Anstoßen kann beispielsweise in Form eines zumindest nahezu elastischen Stoßes erfolgen, so dass sich das bewegliche Element des Magnetventils wieder in Richtung seiner Ruhestellung bewegt.

Bei einer bevorzugten Ausführungsform des erfindungsgemäßen Verfahrens ist vorgesehen, dass die weiteren Eigenschaften des Ansteuerstromprofils eine Anzugssteilheit umfassen. Die Anzugssteilheit beschreibt in diesem Zusammenhang die Steilheit der Kennlinie des Ansteuerstroms bis zum Erreichen einer Anzugsstromphase.

Zusätzlich oder alternativ kann bei dem erfindungsgemäßen Verfahren weiterhin vorgesehen sein, dass die weiteren Eigenschaften des Ansteuerstromprofils die Dauer einer Anzugsstromphase und/oder die Höhe des Anzugsstroms umfassen. Als Anzugsstrom wird üblicherweise ein relativ hoher Strom verwendet, der erforderlich ist, um das Magnetventil in die Arbeitsstellung zu bringen. In der Regel wird die Dauer der Anzugsphase derart gewählt, dass das Magnetventil sicher in seine Arbeitsstellung gelangt, beispielsweise um ein vollständiges Öffnen des Magnetventils sicherzustellen. In einigen Fällen kann jedoch auch ein Abschalten des Magnetventils aus der Anzugsphase vorteilhaft sein, insbesondere bei extrem kurzen Magnetventil-Arbeitsstellungsdauern.

Zusätzlich oder alternativ kann bei dem erfindungsgemäßen Verfahren vorgesehen sein, dass die weiteren Eigenschaften des Ansteuerstromprofils die Dauer einer Haltestromphase und/oder die Höhe des Haltestroms umfassen. Der Haltestrom ist üblicherweise niedriger als der Anzugsstrom und wird ausreichend hoch gewählt, um das bereits in der Arbeitsstellung befindliche Magnetventil in der Arbeitsstellung zu halten. Die Dauer der Haltestromphase wird üblicherweise durch die gewünschte Magnetventil-Arbeitsstellungsdauer vorgegeben.

Zusätzlich oder alternativ kann bei dem erfindungsgemäßen Verfahren weiterhin vorgesehen sein, dass die weiteren Eigenschaften des Ansteuerstromprofils die Steilheit und/oder die Dauer einer zwischen der Anzugsstromphase und der Haltestromphase gelegenen Übergangsphase umfassen. Innerhalb dieser Übergangsphase fällt der Strom vom Anzugsstromniveau auf das Haltestromniveau ab und es ist in vielen Fällen erwünscht, dass das Haltestromniveau schnell erreicht wird, so dass eine große (negative) Steilheit der Stromkennlinie in dieser Übergangsphase erwünscht ist.

Zusätzlich oder alternativ kann bei dem erfindungsgemäßen Verfahren vorgesehen sein, dass die weiteren Eigenschaften des Ansteuerstromprofils die Abschaltsteilheit umfassen. Unter der Abschaltsteilheit versteht man die (negative) Steigung der Stromkennlinie nach dem Abschalten des Magnetventils. Üblicherweise erfolgt dieses Abschalten aus der Haltephase. In einigen Fällen kann es jedoch vorteilhaft sein, das Magnetventil direkt aus der Anzugsphase abzuschalten, weshalb die Variation der Abschaltsteilheit erfindungsgemäß beide Fälle umfassen kann.

Bei einer besonders bevorzugten Ausführungsform des erfindungsgemäßen Verfahrens ist vorgesehen, dass die Ansteuerung des Magnetventils zur Kraftstoffvoreinspritzung erfolgt, wie dies eingangs schon näher erläutert wurde. Dennoch sind auch andere Anwendungsgebiete des erfindungsgemäßen Verfahrens denkbar.

Bei einer Ausführungsform des erfindungsgemäßen Verfahrens ist insbesondere in diesem Zusammenhang vorgesehen, dass mehrere Magnetventile vorgesehen sind, wobei jedem Zylinder eines Verbrennungsmotors zumindest eines der Magnetventile zugeordnet ist, und dass die Ansteuerdauer und/oder die weiteren Eigenschaften des Ansteuerstromprofils zur Laufzeit zylinderselektiv verändert werden. Die Beeinflussung der Magnetventil-Arbeitsstellungsdauer und damit die Beeinflussung der bei der Voreinspritzung eingespritzten Kraftstoffmenge kann unter anderem in vorteilhafter Weise im Zusammenhang mit der Injektorklassierung und dem Injektormengenabgleich eingesetzt werden, um die die Magnetventile aufweisenden Injektoren auch in dem Kennfeldbereich mit niedrigen Einspritzmengen gleichzustellen.

Bei einer anderen Ausführungsform des erfindungsgemäßen Verfahrens ist ebenfalls vorgesehen, dass mehrere Magnetventile vorgesehen sind, wobei jedem Zylinder eines Verbrennungsmotors zumindest eines der Magnetventile zugeordnet ist. Bei dieser Ausführungsform ist jedoch vorgesehen, dass die Ansteuerdauer und/oder die weiteren Eigenschaften des Ansteuerstromprofils für alle Zylinder gemeinsam verändert werden. Auch Mischformen der soeben beschriebenen Ausführungsformen sind denkbar, beispielsweise derart, dass zunächst eine zylinderselektive Anpassung der die Magnetventile aufweisenden Injektoren vorgenommen wird, beispielsweise nach der Motorenfertigung, während die Ansteuerstromprofile im Normalbetrieb für alle Zylinder gemeinsam verändert werden.

Jede zur Durchführung des erfindungsgemäßen Verfahrens geeignete Vorrichtung fällt in den Schutzbereich der zugehörigen Ansprüche.

Dadurch, dass bei der erfindungsgemäßen Vorrichtung vorgesehen ist, dass die Magnetventilansteuereinrichtung zumindest bei kurzen Magnetventil-Arbeitsstellungsdauern zusätzlich zur Ansteuerdauer weitere Eigenschaften eines Ansteuerstromprofils verändern kann, ist es ähnlich wie bei dem erfindungsgemäßen Verfahren möglich, die Magnetventil-Arbeitsstellungsdauer auch bei kurzen Magnetventil-Arbeitsstellungsdauern genau zu steuern. Beispielsweise dann, wenn das Magnetventil ein Injektor-Magnetventil einer Kraftstoff-Einspritzanlage ist, kann dadurch insbesondere die bei einer Voreinspritzung eingespritzte Kraftstoffmenge gezielt variiert werden, beispielsweise um vorgegebene Emissionsgrenzwerte einzuhalten.

Ähnlich wie bei dem erfindungsgemäßen Verfahren ist auch bei der erfindungsgemäßen Vorrichtung vorzugsweise vorgesehen, dass die weiteren Eigenschaften des Ansteuerstromprofils die Kinetik des Magnetventils beeinflussen, beispielsweise den Impuls, der beim Anstoßen eines beweglichen Elements des Magnetventils übertragen wird.

Bei der erfindungsgemäßen Vorrichtung kann ähnlich wie bei dem erfindungsgemäßen Verfahren vorgesehen sein, dass die weiteren Eigenschaften des Ansteuerstromprofils eine Anzugssteilheit umfassen, wobei die Anzugssteilheit in diesem Zusammenhang wieder die Steilheit der Kennlinie des Ansteuerstroms bis zum Erreichen einer Anzugsstromphase beschreibt.

Zusätzlich oder alternativ kann bei der erfindungsgemäßen Vorrichtung vorgesehen sein, dass die weiteren Eigenschaften des Ansteuerstromprofils die Dauer einer Anzugsstromphase und/oder die Höhe des Anzugsstroms umfassen. Als Anzugsstrom wird auch in diesem Zusammenhang üblicherweise ein relativ hoher Strom verwendet, der erforderlich ist, um das Magnetventil in die Arbeitsstellung zu bringen. In der Regel wird die Dauer der Anzugsphase wie erwähnt derart gewählt, dass die Arbeitsstellung des Magnetventils sicher erreicht wird, beispielsweise um ein vollständiges Öffnen des Magnetventils sicherzustellen. In einigen Fällen kann jedoch auch ein Abschalten des Magnetventils aus der Anzugsphase vorteilhaft sein, wie dies bereits im Zusammenhang mit dem erfindungsgemäßen Verfahren erläutert wurde.

Zusätzlich oder alternativ kann bei der erfindungsgemäßen Vorrichtung vorgesehen sein, dass die weiteren Eigenschaften des Ansteuerstromprofils die Dauer einer Haltestromphase und/oder die Höhe des Haltestroms umfassen. Der Haltestrom ist, wie erwähnt, üblicherweise niedriger als der Anzugsstrom und wird ausreichend hoch gewählt, um das bereits in der Arbeitsstellung befindliche Magnetventil in der Arbeitsstellung zu halten. Die Dauer der Haltestromphase wird auch hier durch die gewünschte Magnetventil-Arbeitsstellungsdauer vorgegeben.

Auch bei der erfindungsgemäßen Vorrichtung kann zusätzlich oder alternativ vorgesehen sein, dass die weiteren Eigenschaften des Ansteuerstromprofils die Steilheit und/oder die Dauer einer zwischen der Anzugsstromphase und der Haltestromphase gelegenen Übergangsphase umfassen. Innerhalb dieser Übergangsphase fällt der Strom wie erwähnt vom Anzugsstromniveau auf das Haltestromniveau ab und es ist in vielen Fällen erwünscht, dass das Haltestromniveau schnell erreicht wird, so dass eine große (negative) Steilheit der Stromkennlinie in dieser Übergangsphase erwünscht ist, wie dies bereits im Zusammenhang mit dem erfindungsgemäßen Verfahren erläutert wurde.

Zusätzlich oder alternativ kann bei der erfindungsgemäßen Vorrichtung vorgesehen sein, dass die weiteren Eigenschaften des Ansteuerstromprofils die Abschaltsteilheit umfassen. Unter der Abschaltsteilheit versteht man auch im Zusammenhang mit der erfindungsgemäßen Vorrichtung die (negative) Steigung der Stromkennlinie nach dem Abschalten des Magnetventils. Üblicherweise erfolgt dieses Abschalten wie erwähnt aus der Haltephase. In einigen Fällen kann es jedoch vorteilhaft sein, das Magnetventil direkt aus der Anzugsphase abzuschalten, weshalb die Variation der Abschaltsteilheit auch hier beide Fälle umfassen kann.

Ohne dass dies eine Einschränkung darstellt, ist auch bei einer besonders bevorzugten Ausführungsform der erfindungsgemäßen Vorrichtung vorgesehen, dass die Ansteuerung des Magnetventils zur Kraftstoffvoreinspritzung erfolgt, wie dies insbesondere eingangs schon näher erläutert wurde.

Weiterhin kann auch bei der erfindungsgemäßen Vorrichtung eine Ausführungsform vorsehen, dass mehrere Magnetventile vorgesehen sind, wobei jedem Zylinder eines Verbrennungsmotors zumindest eines der Magnetventile zugeordnet ist, und dass die Ansteuerdauer und/oder die weiteren Eigenschaften des Ansteuerstromprofils zur Laufzeit zylinderselektiv verändert werden. Die Beeinflussung der Magnetventil-Arbeitsstellungsdauer und damit die Beeinflussung der bei der Voreinspritzung eingespritzten Kraftstoffmenge kann unter anderem in vorteilhafter Weise im Zusammenhang mit der Injektorklassierung und dem Injektormengenabgleich eingesetzt werden, um die die Magnetventile aufweisenden Injektoren auch in dem Kennfeldbereich mit niedrigen Einspritzmengen gleichzustellen, wie dies bereits im Zusammenhang mit dem erfindungsgemäßen Verfahren erläutert wurde.

Bei einer anderen Ausführungsform der erfindungsgemäßen Vorrichtung ist ebenfalls vorgesehen, dass mehrere Magnetventile vorgesehen sind, wobei jedem Zylinder eines Verbrennungsmotors zumindest eines der Magnetventile zugeordnet ist. Bei dieser Ausführungsform ist weiterhin vorgesehen, dass die Ansteuerdauer und/oder die weiteren Eigenschaften des Ansteuerstromprofils für alle Zylinder gemeinsam verändert werden. Ähnlich wie bei den erfindungsgemäßen Verfahren sind auch bei der erfindungsgemäßen Vorrichtung Kombinationen der soeben beschriebenen Ausführungsformen möglich, beispielsweise um einen zylinderselektiven Erstabgleich vorzunehmen und um die Ansteuerdauer und/oder die weiteren Eigenschaften des Ansteuerstromprofils später für alle Zylinder gemeinsam zu verändern.

### Zeichnungen

Die Erfindung wird nachfolgend anhand der zugehörigen Zeichnungen noch näher erläutert.

Es zeigen:
- Figur 1: den bekannten Zusammenhang zwischen der Partikelemission und der Emission von Stickoxiden für einen Dieselmotor,
- Figur 2: ein an sich bekanntes Kennlinienfeld, das den Zusammenhang von eingespritzter Kraftstoffmenge und Ansteuerdauer des Magnetventils für unterschiedliche Drücke innerhalb eines Kraftstoffspeichers veranschaulicht,
- Figur 3: ein Ansteuerstromprofil zur Erläuterung des Grundgedankens der vorliegenden Erfindung, und
- Figur 4: eine Ausführungsform der Erfindungsgemäßen Vorrichtung, die eine Magnetventilansteuereinrichtung umfasst, die auch zur Durchführung des erfindungsgemäßen Verfahrens verwendet werden kann.

### Beschreibung des Ausführungsbeispiels

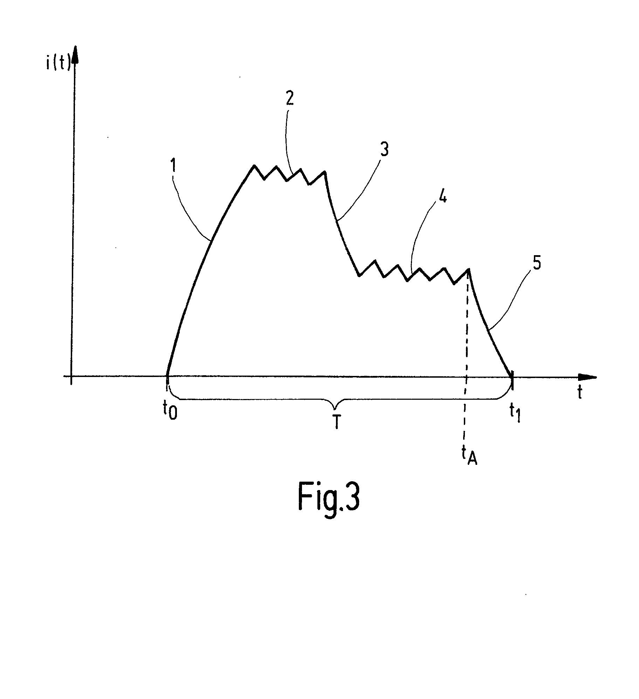

In Figur 3 ist ein Ansteuerstromprofil i(t) in Abhängigkeit von der Zeit t dargestellt. Die Ansteuerdauer T entspricht dem Zeitraum zwischen einem Zeitpunkt t₀, zu dem der Ansteuerstrom zu steigen beginnt, und einem Zeitpunkt t₁ zu dem der Strom i(t) wieder auf Null abgesunken ist, nachdem das Magnetventil zu einem Zeitpunkt t_{A} abgeschaltet wurde. Der die Anzugssteilheit festlegende Kurvenabschnitt ist mit dem Bezugszeichen 1 gekennzeichnet und erstreckt sich vom Zeitpunkt t₀ bis zum Erreichen eines Anzugsstromniveaus. Der die Anzugsstromphase kennzeichnende Kurvenabschnitt ist mit dem Bezugszeichen 2 versehen. Der Kurvenabschnitt, der die Haltestromphase mit einem niedrigeren Haltestrom kennzeichnet, ist mit dem Bezugszeichen 4 versehen. Zwischen der Anzugsstromphase 2 und der Haltestromphase 4 befindet sich eine Übergangsphase 3, in der der Strom vom Anzugsstromniveau auf das Haltestromniveau abfällt. Nach dem Abschalten des Magnetventils zum Zeitpunkt t_{A} sinkt der Strom wieder auf Null ab, wobei der die Abschaltsteilheit festlegende Kurvenabschnitt mit dem Bezugszeichen 5 versehen ist. Im Gegensatz zu bekannten Ansteuerverfahren, bei denen lediglich die Ansteuerdauer T verändert wurde, beispielsweise um die bei einer Voreinspritzung eingespritzte Kraftstoffmenge zu variieren, ist erfindungsgemäß vorgesehen, dass weitere Eigenschaften des Ansteuerstromprofils veränderbar sind. Diese weiteren Eigenschaften des Ansteuerstromprofils können dabei insbesondere umfassen:
- Anzugssteilheit 1,
- Dauer einer Anzugsstromphase 2 und/oder Höhe des Anzugsstroms,
- Dauer der Haltestromphase 4 und/oder Höhe des Haltestroms,
- Steilheit und/oder Dauer der zwischen der Anzugsstromphase 2 und der Haltestromphase 4 gelegenen Übergangsphase 3,
- Abschaltsteilheit.

Die Erfindung ermöglicht es dadurch beispielsweise, die bei einer Voreinspritzung eingespritzte Kraftstoffmenge derart einzustellen, dass vorgegebene Emissionsgrenzwerte eingehalten werden können, was gemäß dem Stand der Technik aufgrund der im Mengenkennlinienfeld vorhandenen Plateaus P problematisch war. Die Anpassung der Einspritzmenge kann erfindungsgemäß durch eine Veränderung beziehungsweise Einstellung der Höhe der entsprechenden Plateaus P im Mengenkennlinienfeld erfolgen.

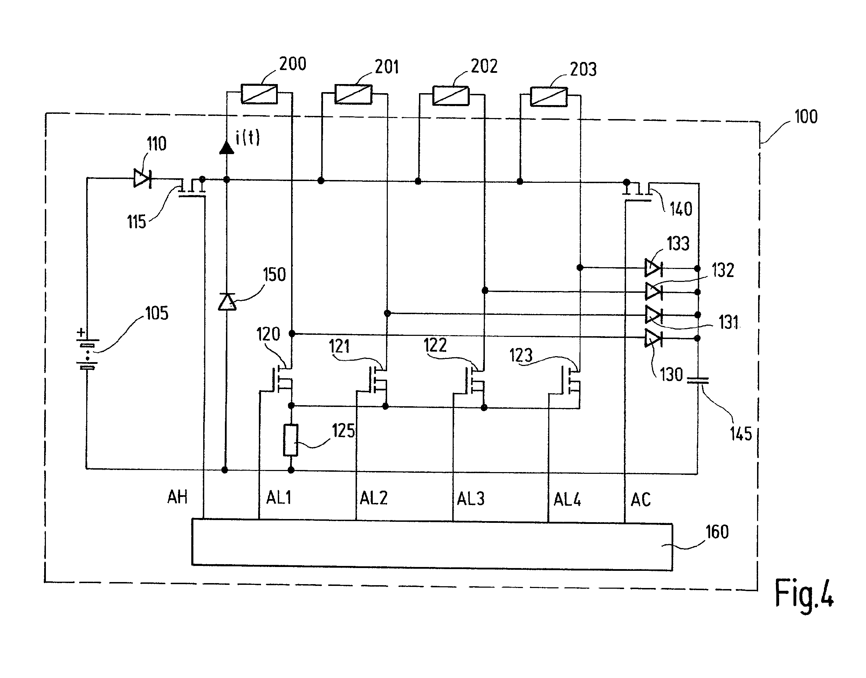

Figur 4 zeigt ein Ausführungsbeispiel der erfindungsgemäßen Vorrichtung. Diese Vorrichtung umfasst eine insgesamt mit 100 bezeichnete Magnetventilansteuereinrichtung, die auch zur Durchführung des erfindungsgemäßen Verfahrens geeignet ist. Die dargestellte Ausführungsform wird im Zusammenhang mit einer Vierzylinderbrennkraftmaschine verwendet. Dabei ist jedem in der Ruhestellung geschlossenem Magnetventil 200, 201, 202, 203 ein nicht dargestelltes Einspritzventil und jedem Einspritzventil ein nicht dargestellter Zylinder der Brennkraftmaschine zugeordnet. Jeweils ein Anschluss der Magnetventile 200 bis 203 steht über ein Schaltmittel 115 und eine Diode 110 mit einer Spannungsversorgung 105 in Verbindung. Die Diode 110 ist so angeordnet, dass sie mit ihre Anode mit dem Pluspol und mit ihrer Katode mit dem Schaltmittel 115 in Verbindung steht. Bei dem Schaltmittel 115 handelt es sich vorzugsweise um eine Feldeffekttransistor. Jeweils der zweite Anschluss der Magnetventile 200 bis 203 steht über jeweils ein zweites Schaltmittel 120, 121, 122 und 123 mit einem Widerstandsmittel 125 in Verbindung. Bei dem Schaltmittel 120 bis 123 handelt es sich vorzugsweise ebenfalls um einen jeweiligen Feldeffekttransistor. Die Schaltmittel 120 bis 123 werden als Lowside-Schalter und das Schaltmittel 115 als Highside-Schalter bezeichnet. Der zweite Anschluss des Wiederstandsmittel 125 steht mit dem zweiten Anschluss der Spannungsversorgung in Verbindung. Jedem Magnetventil 200 bis 203 ist eine Diode 130, 131, 132 und 133 zugeordnet. Der Anodenanschluss der Dioden steht jeweils mit dem Verbindungspunkt zwischen Magnetventil und Lowside-Schalter in Kontakt. Der Katodenanschluss steht mit einem Kondensator 145 sowie einem weiteren Schaltmittel 140 in Verbindung. Der zweite Anschluss des Schaltmittels 140 steht mit den ersten Anschlüssen der Magnetventile 200 bis 203 in Kontakt. Bei dem Schaltmittel 140 handelt es sich vorzugsweise ebenfalls um einen Feldeffekttransistor. Dieses Schaltmittel 140 wird auch als Booster-Schalter bezeichnet. Der zweite Anschluss des Kondensators 145 steht ebenfalls mit dem zweiten Anschluss der Versorgungsspannung 105 in Verbindung. Der Highside-Schalter 115 wird von einer Steuereinheit 160 mit einem Ansteuersignal AH beaufschlagt. Das Schaltmittel 120 wird von der Steuereinheit 160 mit einem Ansteuersignal AL1, das Schaltmittel 121 mit einem Ansteuersignal AL2, das Schaltmittel 122 mit einem Ansteuersignal AL3, das Schaltmittel 123 mit einem Ansteuersignal AL4 und das Schaltmittel 140 mit einem Ansteuersignal AC beaufschlagt. Zwischen dem zweiten Anschluss der Spannungsversorgung 105 und dem Verbindungspunkt zwischen dem Schaltmittel 115 und den ersten Anschlüssen der Magnetventile 200 bis 203 ist eine Diode 150 geschaltet. Hierbei ist die Anode der Diode mit dem zweiten Anschluss der Spannungsversorgung 105 verbunden. Mittels des Widerstandes 125 kann der durch die Magnetventile fließende Strom ermittelt werden. Dabei ist eine Strommessung über den Strommesswiderstand 125 nur möglich, wenn eines der Schaltmittel 120 bis 123 geschlossen ist. Um den Strom auch bei geöffneten Lowside-Schaltern erfassen zu können, kann der Strommesswiderstand auch an anderer Stelle angeordnet werden. Beispielsweise kann der zweite Anschluss des Kondensators 145 mit dem Verbindungspunkt zwischen dem Strommessmittel 125 und dem Schaltmittel 120 bis 123 verbunden werden. In diesem Fall ist auch eine Strommessung bei gesperrtem Lowside-Schalter möglich. Ferner kann das Strommessmittel zwischen der Spannungsversorgung und dem Highside-Schalter beziehungsweise zwischen dem Highside-Schalter und den Magnetventilen 200 bis 203 angeordnet sein. Durch eine geeignete Programmierung der Steuereinheit 160 können die erfindungsgemäßen Ansteuerstromprofile realisiert werden, wobei in Figur 4 nur das Ansteuerstromprofil i(t) des Magnetventils 200 angedeutet ist.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren zum Ansteuern von zumindest einem eine Ruhestellung und eine Arbeitsstellung aufweisenden Magnetventil (200, 201, 202, 203), insbesondere einem Injektor-Magnetventil (200, 201, 202, 203) einer Kraftstoff-Einspritzanlage, bei dem die Magnetventil-Arbeitsstellungsdauer über die Ansteuerdauer des Magnetventils (200, 201, 202, 203) beeinflusst wird, **dadurch gekennzeichnet, dass** zumindest bei kurzen Magnetventil-Arbeitsstellungsdauern zusätzlich zur Ansteuerdauer (T) weitere Eigenschaften eines Ansteuerstromprofils (i(t)) verändert werden.

2. Verfahren nach Anspruch 1, **dadurch gekennzeichnet, dass** die weiteren Eigenschaften des Ansteuerstromprofils (i(t)) die Kinetik des Magnetventils (200, 201, 202, 203) beeinflussen.

3. Verfahren nach einem der vorhergehenden Ansprüche, **dadurch gekennzeichnet, dass** die weiteren Eigenschaften des Ansteuerstromprofils (i(t)) eine Anzugssteilheit (1) umfassen.

4. Verfahren nach einem der vorhergehenden Ansprüche, **dadurch gekennzeichnet, dass** die weiteren Eigenschaften des Ansteuerstromprofils (i(t)) die Dauer einer Anzugsstromphase (2) und/oder die Höhe des Anzugsstroms umfassen.

5. Verfahren nach einem der vorhergehenden Ansprüche, **dadurch gekennzeichnet, dass** die weiteren Eigenschaften des Ansteuerstromprofils (i(t)) die Dauer einer Haltestromphase (4) und/oder die Höhe des Haltestroms umfassen.

6. Verfahren nach einem der vorhergehenden Ansprüche, **dadurch gekennzeichnet, dass** die weiteren Eigenschaften des Ansteuerstromprofils (i(t)) die Steilheit und/oder die Dauer einer zwischen der Anzugsstromphase (2) und der Haltestromphase (4) gelegenen Übergangsphase (3) umfassen.

7. Verfahren nach einem der vorhergehenden Ansprüche, **dadurch gekennzeichnet, dass** die weiteren Eigenschaften des Ansteuerstromprofils (i(t)) die Abschaltsteilheit (5) umfassen.

8. Verfahren nach einem der vorhergehenden Ansprüche, **dadurch gekennzeichnet, dass** die Ansteuerung des Magnetventils (200, 201, 202, 203) zur Kraftstoffvoreinspritzung erfolgt.

9. Verfahren nach einem der vorhergehenden Ansprüche, **dadurch gekennzeichnet, dass** mehrere Magnetventile (200, 201, 202, 203) vorgesehen sind, wobei jedem Zylinder eines Verbrennungsmotors zumindest eines der Magnetventile (200, 201, 202, 203) zugeordnet ist, und dass die Ansteuerdauer und/oder die weiteren Eigenschaften des Ansteuerstromprofils (i(t)) zur Laufzeit zylinderselektiv verändert werden.

10. Verfahren nach einem der vorhergehenden Ansprüche, **dadurch gekennzeichnet, dass** mehrere Magnetventile (200, 201, 202, 203) vorgesehen sind, wobei jedem Zylinder eines Verbrennungsmotors zumindest eines der Magnetventile (200, 201, 202, 203) zugeordnet ist, und dass die Ansteuerdauer und/oder die weiteren Eigenschaften des Ansteuerstromprofils (i(t)) für alle Zylinder gemeinsam verändert werden.

11. Vorrichtung zur Durchführung des Verfahrens nach einem der vorhergehenden Ansprüche.

12. Vorrichtung mit zumindest einem eine Ruhestellung und eine Arbeitsstellung aufweisenden Magnetventil (200, 201, 202, 203), insbesondere einem Injektor-Magnetventil (200, 201, 202, 203) einer Kraftstoff-Einspritzanlage, und mit einer Magnetventilansteuereinrichtung (100), die über die Ansteuerdauer (T) die Magnetventil-Arbeitsstellungsdauer beeinflusst, **dadurch gekennzeichnet, dass** die Magnetventilansteuereinrichtung (100) zumindest bei kurzen Magnetventil-Arbeitsstellungsdauern zusätzlich zur Ansteuerdauer (T) weitere Eigenschaften eines Ansteuerstromprofils (i(t)) verändern kann.

13. Vorrichtung nach Anspruch 12, **dadurch gekennzeichnet, dass** die weiteren Eigenschaften des Ansteuerstromprofils (i(t)) die Kinetik des Magnetventils (200, 201, 202, 203) beeinflussen.

14. Vorrichtung nach einem der Ansprüche 12 bis 13, **dadurch gekennzeichnet, dass** die weiteren Eigenschaften des Ansteuerstromprofils (i(t)) eine Anzugssteilheit (1) umfassen.

15. Vorrichtung nach einem der Ansprüche 12 bis 14, **dadurch gekennzeichnet, dass** die weiteren Eigenschaften des Ansteuerstromprofils (i(t)) die Dauer einer Anzugsstromphase (2) und/oder die Höhe des Anzugsstroms umfassen.

16. Vorrichtung nach einem der Ansprüche 12 bis 15, **dadurch gekennzeichnet, dass** die weiteren Eigenschaften des Ansteuerstromprofils (i(t)) die Dauer einer Haltestromphase (4) und/oder die Höhe des Haltestroms umfassen.

17. Vorrichtung nach einem der Ansprüche 12 bis 16, **dadurch gekennzeichnet, dass** die weiteren Eigenschaften des Ansteuerstromprofils (i(t)) die Steilheit und/oder die Dauer einer zwischen der Anzugsstromphase (2) und der Haltestromphase (4) gelegenen Übergangsphase (3) umfassen.

18. Vorrichtung nach einem der Ansprüche 12 bis 17, **dadurch gekennzeichnet, dass** die weiteren Eigenschaften des Ansteuerstromprofils (i(t)) die Abschaltsteilheit (5) umfassen.

19. Vorrichtung nach einem der Ansprüche 12 bis 18, **dadurch gekennzeichnet, dass** die Ansteuerung des Magnetventils (200, 201, 202, 203) zur Kraftstoffvoreinspritzung erfolgt.

20. Vorrichtung nach einem der Ansprüche 12 bis 19, **dadurch gekennzeichnet, dass** mehrere Magnetventile (200, 201, 202, 203) vorgesehen sind, wobei jedem Zylinder eines Verbrennungsmotors zumindest eines der Magnetventile (200, 201, 202, 203) zugeordnet ist, und dass die Ansteuerdauer und/oder die weiteren Eigenschaften des Ansteuerstromprofils (i(t)) zur Laufzeit zylinderselektiv verändert werden.

21. Vorrichtung nach einem der Ansprüche 12 bis 20, **dadurch gekennzeichnet, dass** mehrere Magnetventile (200, 201, 202, 203) vorgesehen sind, wobei jedem Zylinder eines Verbrennungsmotors zumindest eines der Magnetventile (200, 201, 202, 203) zugeordnet ist, und dass die Ansteuerdauer und/oder die weiteren Eigenschaften des Ansteuerstromprofils (i(t)) für alle Zylinder gemeinsam verändert werden.
